Europäisches Patentamt

**European Patent Office**

**Office européen des brevets**

(19)

(11) Veröffentlichungsnummer : **0 022 133**
**B1**

(12) **EUROPÄISCHE PATENTSCHRIFT**

(45) Veröffentlichungstag der Patentschrift :
09.03.83

(21) Anmeldenummer : **80890074.0**

(22) Anmeldetag : **30.06.80**

(51) Int. Cl.³ : **C 23 D 5/02**, C 23 D 11/00,
B 05 C 3/09, B 01 J 3/00

(54) **Vorrichtung zum Überziehen von Gegenständen mit Emailschlicker.**

(30) Priorität : **02.07.79 AT 4625/79**

(43) Veröffentlichungstag der Anmeldung :
**07.01.81 Patentblatt 81/01**

(45) Bekanntmachung des Hinweises auf die Patenterteilung : **09.03.83 Patentblatt 83/10**

(84) Benannte Vertragsstaaten :
**BE CH DE FR GB IT LI LU NL SE**

(56) Entgegenhaltungen :
**DE A 1 621 395**
**DE A 2 028 079**
**DE A 2 209 625**

(73) Patentinhaber : **Austria Email-EHT Aktiengesellschaft**
**Breitenseer Strasse 76-80**
**A-1140 Wien (AT)**

(72) Erfinder : **Hartmann, Ferdinand**
**Hockegasse 34**
**A-1180 Wien (AT)**

(74) Vertreter : **Köhler-Pavlik, Johann, Dipl.-Ing.**
**Margaretenplatz 5**
**A-1050 Wien (AT)**

## Vorrichtung zum Überziehen von Gegenständen mit Emailschlicker

Die Erfindung betrifft eine Vorrichtung zum Überziehen von Gegenständen, vorzugsweise von Auspufftöpfen oder dergleichen Hohlkörpern mit Emailschlicker, mit einem evakuierbaren, aus zwei gegeneinander und voneinander weg bewegbaren, vorzugsweise schwenkbaren, schalenartigen Teilen bestehenden Behältern zur Aufnahme der zu überziehenden Gegenstände, von welchen zumindest einer der Teile mit einer Unterdruckquelle verbindbar ist, wobei Einrichtungen zur Zufuhr und zum Wegbringen von Emailschlicker vorgesehen sind.

Durch die DE-A 2 028 079 ist eine Einrichtung zum Auftragen von Emailschlicker aus einem Vorratsbehälter auf zu emaillierende Gegenstände in einem Auftragsraum bekannt geworden, welcher von einer durch einen Deckel abgeschlossenen Wanne gebildet ist, welche an eine Saug- bzw. Druckleitung angeschlossen ist und über ein durch Ventil abschließbares Ansaugrohr in den Schlicker des Vorratsbehälters taucht, wobei im Auftragsraum eine Auflage, beispielsweise ein Rost zur Aufnahme des zu emaillierenden Gegenstandes vorgesehen ist. Bei dieser Einrichtung besteht der die zu behandelnden Gegenstände aufnehmende Behälter aus einer Wanne und einem Deckel, die eine horizontale Teilungsebene bilden.

Durch die AT-B 265 814 ist eine andere Vorrichtung dieser Art bekannt geworden, die ein nach unten offenes Gefäß (Glocke oder Caisson) umfaßt, welches mit einer Unterdruckquelle in Verbindung gebracht werden kann. Die zu überziehenden Gegenstände werden über einem Vorratsgefäß für Emailschlicker oberhalb des Schlickerspiegels gehalten, und die Glocke wird über die Gegenstände abgesenkt, bis ihr Rand in den Schlicker eintaucht. Die Glocke wird sodann evakuiert, um auch feine Spalten, Poren und dergleichen der Gegenstände zu entlüften und um danach den Schlicker in die Glocke einzusaugen.

Mit diesen Vorrichtungen kann wohl ein sehr gutes Eindringen des Emailschlickers in Poren, Schlitze und dergleichen kleine Hohlräume der Gegenstände erzielt werden ; nachteilig ist jedoch, daß die zu überziehenden, nur einzeln nach Verschwenken des Deckels bzw. Heben der Glocke in zeitraubender Arbeit auf die Halterung gebracht und nach dem Überziehen wieder weggenommen werden können. Des weiteren mußte die Glocke, um das Anbringen und Wegnehmen der Gegenstände zu erleichtern, sehr hoch angehoben werden ; andererseits mußt die Glocke aber auch weit abgesenkt werden, um auch nach dem Absinken des Schlickerspiegels infolge des Einsaugens des Schlickers in die Glocke die Abdichtung zwischen Glockenrand und Schlicker sicherzustellen. Alle diese Umstände machten ein schnelles Arbeiten und damit das rasche Überziehen vieler Gegenstände in kurzen Zeitabständen unmöglich.

Zur Behebung dieser Nachteile wird vorgeschlagen, daß bei einer Einrichtung der eingangs angegebenen Art erfindungsgemäß der evakuierbare Behälter in vertikaler Ebene geteilt ist und die Ränder der schalenartigen Teile mit einer aus weichem Material bestehenden Dichtung eingefaßt sind, in welche sich die Halterungen für die Gegenstände unter Abdichtung eindrücken können. Durch die anmeldungsgemäße Teilung werden zeitaufwendige Schritte eingespart, wie z. B. das Ablegen des Emailliergutes auf einem Rost bzw. das erneute Anhängen sowie das Weg- bzw. Zurückschwenken des Deckels. Die erfindungsgemäße Maßnahme bietet die Möglichkeit, daß nach Öffnen des Behälters die zu emaillierenden Gegenstände auf einem dünnen Draht eines endlos umlaufenden Fördersystems hängend in den Behandlungsraum eingefahren, in diesem verbleiben und sodann aus diesem auch hinausgefahren werden können. Schließlich wurden auch die durch die vertikale Teilung des Behälters entstehenden Dichtungsprobleme gelöst.

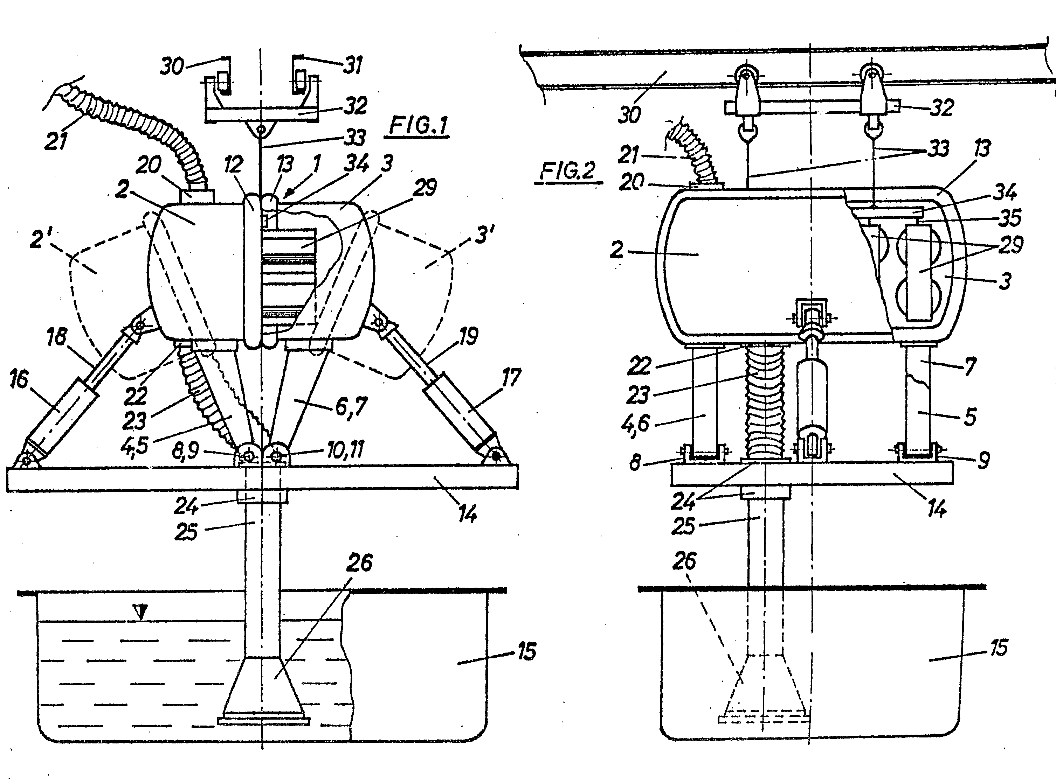

Weitere Merkmale der Erfindung werden im folgenden an Hand der Zeichnung erläutert, welche in keineswegs einschränkender Weise ein Ausführungsbeispiel der erfindungsgemäßen Vorrichtung veranschaulicht. Hiebei zeigt Figur 1 die Vorrichtung von der Seite, in geschlossenem Zustand, wobei der geöffnete Zustand durch unterbrochene Linien angedeutet ist, und Figur 2 zeigt die Vorrichtung von vorn ; in beiden Figuren sind Teile des Behälters weggebrochen, um die zu überziehenden Gegenstände erkennbar zu machen.

Der allgemein mit 1 bezeichnete Behälter ist nach einer vertikalen Ebene geteilt und besteht demnach aus zwei schalenartigen Teilen 2 und 3. Jeder dieser Teile 2, 3 ist starr an je zwei Stelzen oder Stützen 4, 5 beziehhungsweise 6, 7 befestigt. Die zu je einem Teil 2 beziehungsweise 3 gehörenden Stelzen 4, 5 ; 6, 7 sind in Gelenken 8, 9 beziehungsweise 10, 11 gelagert und um horizontale Achsen verschwenkbar. Jeder der Teile 2, 3 trägt an seinem Rande eine in sich geschlossene Dichtung 12 beziehungsweise 13 aus sehr weichem Material, etwa Schaumgummi mit geschlossenen Poren oder dergleichen.

Die Gelenke 8 bis 11 sind auf einem Rahmen 14 montiert, welcher in nicht näher gezeigter Weise oberhalb eines Schlicker-Vorratsbehälters 15 ortsfest gehalten ist.

Am Rahmen 14 sind des weiteren pneumatische Arbeitszylinder 16, 17 angelenkt, deren Kolbenstangen 18 und 19 an je einem der schalenartigen Teile 2, 3 angreifen.

Der schalenartige Teil 2 ist an seiner Oberseite mit einem Ventil 20 versehen, von welchem ein zu einer Unterdruckwelle (nicht gezeigt) führender Schlauch 21 ausgeht. Ein weiteres Schlauch-Anschlußstück 22 befindet sich an der Unterseite des Teiles 2 ; von diesem Anschlußstück führt ein Schlauch 23 zu einem am Rahmen 14 angebrachten Verbindungsstück 24. Dieses Verbindungsstück 24 trägt einen Rohrstutzen 25 mit Ventil 26.

Zum Zubringen sowie zum Wiederwegführen der zu überziehenden Gegenstände 29, zum Beispiel Auspufftöpfe für Kraftfahrzeuge, sind oberhalb des Behälters 1 zwei Transportschienen 30, 31 für daran verfahrbare Wagen 32 nach Art einer Hängebahn, Umlaufbahn oder dergleichen vorgesehen. An Drähten, dünnen Stangen oder an Blechstreifen 33, die vom Wagen 32 ausgehen, ist eine Tragstange 34 befestigt, an welcher mittels Drahtstücken 35 oder dergleichen die zu überziehenden Gegenstände 29 befestigt sind.

Die erfindungsgemäße Vorrichtung arbeitet in der folgenden Weise :

Durch die gleichzeitige Wirkung der Arbeitszylinder 16, 17 im Einziehsinne wird der Behälter 1 geöffnet, das heißt, die beiden schalenartigen Teile 2 und 3 werden in die in Figur 1 mit 2 ' und 3 ' bezeichneten Stellungen gebracht. Die beiden Teile 2, 3 haben dabei einen so grossen gegenseitigen Abstand voneinander, daß die am Wagen 32 hängenden Gegenstände 29 zwischen die beiden Teile 2 und 3 eingefahren werden können. Die Arbeitszylinder 16 und 17 werden jetzt im Ausfahrsinn ihrer Kolben zur Wirkung gebracht und klappen hiedurch die beiden Teile 2 und 3 gegeneinander.

Die wulstartigen, sehr weichen Dichtungen 12, 13 treffen dabei aufeinander und legen sich dabei auch an die Drähte 33 oder dergleichen satt und abdichtend an. Der Behälter ist dadurch geschlossen.

Das Ventil 26 wird nunmehr geschlossen und nach Öffnen des Ventils 20 wird über den Schlauch 21 die im Behälter 1 enthaltene Luft weitestgehend abgesaugt. Mit dem Erreichen eines hinreichenden Unterdruckes im Behälter 1 wird das Ventil 26 geöffnet. Dadurch wird Schlicker über den Schlauch 23 in den Behälter bis zu dessen vollständigen Füllung eingesaugt. Damit sind nun die Gegenstände 29 völlig in Schlicker getaucht, welcher infolge des vorhergegangenen Absaugens der Luft in alle Spalten, Poren, Ritzen und sonstigen freien Räume der Gegenstände 29 eindringen kann.

Nach einer durch Erfahrung gegebenen Verweilzeit, während welcher das Ventil 26 geschlossen sein kann, wird der Schlauch 21 mit dem Luftdruck oder mit Überdruck beaufschlagt, die Ventile 20 und 26 werden geöffnet. Der im Behälter 2 befindliche Schlicker wird dadurch sehr rasch in den Vorratsbehälter 15 zurückgedrückt.

Durch Inbetriebsetzen der Arbeitszylinder 16 und 17 im Einziehsinne ihrer Kolben werden die schalenartigen Teile 2 und 3 wieder in die Stellungen 2 ' und 3 ' verschwenkt ; der Behälter 1 ist dadurch geöffnet. Die jetzt gleichmässig mit Schlicker überzogenen Gegenstände 29 können mittels des Wagens 32 zu weiteren Behandlungsstationen (zum Beispiel trocknen, kühlen, brennen, kühlen, fertigmontieren und so weiter) verbracht werden.

Die Erfindung ist nicht auf das gezeigte Ausführungsbeispiel beschränkt. So kann anstelle der pneumatischen (oder hydraulischen) Motoren (Teile 16 bis 19) auch ein rein mechanischer Antrieb zum Bewegen der schalenartigen Teile 2 und 3 vorgesehen sein. Es kann auch von Vorteil sein, die beiden schalenartigen Teile 2 und 3 nicht an Stelzen (Teile 4 bis 7, wie gezeigt) zu befestigen, sondern sie auf Gleitschienen oder dergleichen zu führen und damit zu sich selbst parallel bleibend auseinander- beziehungsweise zusammenschiebbar zu machen.

## Ansprüche

1. Vorrichtung zum Überziehen von Gegenständen, vorzugsweise von Auspufftöpfen oder dergleichen Hohlkörpern mit Emailschlicker, mit einem evakuierbaren, aus zwei gegeneinander und voneinander weg bewegbaren, vorzugsweise schwenkbaren, schalenartigen Teilen bestehenden Behältern zur Aufnahme der zu überziehenden Gegenstände, von welchen zumindest einer der Teile mit einer Unterdruckquelle verbindbar ist, wobei Einrichtungen zur Zufuhr und zum Wegbringen von Emailschlicker vorgesehen sind, dadurch gekennzeichnet, daß der evakuierbare Behälter (1) in vertikaler Ebene geteilt ist und die Ränder der schalenartigen Teile (2, 3) mit einer aus weichem Material bestehenden Dichtung (12, 13) eingefaßt sind, in welche sich die Halterungen (Teile 33) für die Gegenstände (29) unter Abdichtung eindrücken können.

2. Vorrichtung nach Anspruch 1, dadurch gekennzeichnet, daß jeder schalenartige Teil (2, 3) am Ende von Stelzen (4, 5 ; 6, 7) starr befestigt ist, welche je um eine horizontale Achse verschwenkbar sind.

3. Vorrichtung nach Anspruch 2, dadurch gekennzeichnet, daß die horizontalen Achsen unterhalb der schalenartigen Teile (2, 3) verlaufen.

4. Vorrichtung nach Anspruch 2, dadurch gekennzeichnet, daß an jedem schalenartigen Teil (2, 3) zumindest eine, vorzugsweise pneumatische oder hydraulische Betätigungsvorrichtung (Teile 16 bis 19) angelenkt ist.

5. Vorrichtung nach einem oder mehreren der vorhergehenden Ansprüche, dadurch gekennzeichnet, daß die Stelzen (4, 5 ; 6, 7) und die Betätigungsvorrichtungen (Teile 16 bis 19) an einem gemeinsamen Rahmen (14) angeordnet sind.

## Claims

1. Apparatus for coating articles, preferably exhaust mufflers or the like hollow bodies, with enamel slip, comprising an evacuable container which is adapted to receive the articles to be coated and consists of two shell-like parts which are movable, preferably pivotally movable, towards each other and away from each other and at least one of which is adapted to be connected to a vacuum source, also comprising means for supplying and removing enamel slip, characterized in that the evacuable container (1) is divided in a vertical plane and the edges of the shell-like parts are covered by a sealing element (12, 13) which consists of soft material and into which the holders (parts 33) for the articles (29) can be pressed to form a seal.

2. Apparatus according to claim 1, characterized in that each shell-like part (2, 3) is rigidly secured to the end of stilts (4, 5 ; 6, 7), each of which is pivoted on a horizontal axis.

3. Apparatus according to claim 2, characterized in that the horizontal axes extend below the shell-like parts (2, 3).

4. Apparatus according to claim 2, characterized in that a preferably pneumatic or hydraulic actuator (parts 16 to 19) is pivoted to each shell-like part (2, 3).

5. Apparatus according to any of the preceding claims, characterized in that the stilts (4, 5 ; 6, 7) and the actuators (parts 16 to 19) are mounted on a common frame (14).

## Revendications

1. Dispositif pour revêtir des objets, principalement des pots d'échappement ou d'autres corps creux similaires au moyen de pâte d'émail, comportant un récipient susceptible d'être évacué, se composant de deux pièces de préférence basculables en forme de coquille, susceptibles d'être déplacées l'une vers l'autre et d'être écartées l'une de l'autre, pour recevoir les objets à revêtir, duquel récipient au moins une des pièces est susceptible de se raccorder à une source de dépression, cependant que des dispositifs sont prévus pour amener et évacuer la pâte d'émail, caractérisé en ce que le récipient susceptible d'être évacué est divisé selon un plan vertical et que les bords des pièces en forme de coquille sont pourvus de joints entre lesquels les supports des objets peuvent se pousser de façon à être logés de façon étanche.

2. Dispositif selon la revendication 1, caractérisé en ce que chaque pièce en forme de coquille est montée rigidement sur des extrémités de jambes, qui peuvent chacune basculer autour d'un axe horizontal.

3. Dispositif selon la revendication 2, caractérisé en ce que les axes horizontaux sont disposés en dessous des pièces en forme de coquille.

4. Dispositif selon la revendication 2, caractérisé en ce qu'à chaque pièce en forme de coquille s'applique à l'intervention d'une articulation au moins un dispositif de commande, de préférence pneumatique ou hydraulique.

5. Dispositif selon une ou plusieurs des revendications qui précèdent, caractérisé en ce que les jambes et les dispositifs de commande sont disposés sur un châssis commun.

FIG.1

FIG.2